# EUROPEAN PATENT SPECIFICATION

(11) **EP 2 790 382 B1**
(45) Date of publication and mention of the grant of the patent: **03.05.2017**
(21) Application number: 12884731.6
(22) Date of filing: 17.09.2012
(51) Int. Cl.: H04L 29/06

(54) **PROTECTION METHOD AND DEVICE AGAINST ATTACKS**
SCHUTZVERFAHREN UND SCHUTZVORRICHTUNG GEGEN ANGRIFFE
PROCÉDÉ ET DISPOSITIF DE PROTECTION CONTRE DES ATTAQUES

(43) Date of publication of application: 15.10.2014
(73) Proprietor: Huawei Technologies Co., Ltd., Longgang District Shenzhen, Guangdong 518129 (CN)
(72) Inventor: LIU, Gaoqiang, Shenzhen Guangdong 518129 (CN); PAN, Yongbo, Shenzhen Guangdong 518129 (CN); YANG, Li, Shenzhen Guangdong 518129 (CN)
(74) Representative: Körber, Martin Hans
(86) International application number: PCT/CN2012/081473
(87) International publication number: WO 2014/040292

(56) References cited:
- CN-A- 1 773 904
- CN-A- 101 594 269
- CN-A- 102 195 878
- US-A1- 2004 133 798
- THC: "thc-ssl-dos", , 25 October 2011 (2011-10-25), XP002733932, Retrieved from the Internet: URL:https://www.thc.org/thc-ssl-dos/ [retrieved on 2014-12-17]
- Vincent Bernat: "SSL computational DoS mitigation", , 4 November 2011 (2011-11-04), XP002733933, Retrieved from the Internet: URL:http://vincent.bernat.im/en/blog/2011- ssl-dos-mitigation.html [retrieved on 2014-12-17]

## Description

### TECHNICAL FIELD

The present invention relates to the communications technologies, and in particular, to an attack defense method and device.

### BACKGROUND

The secure socket layer (Secure Socket Layer, hereinafter referred to as SSL for short) protocol is a network secure communications protocol and is used to provide a secure channel between two machines. It has functions of protecting transmitted data and identifying communications machines. An SSL denial of service (Denial of Service, hereinafter referred to as DOS for short) attack behavior is an attack manner in which a general computer is connected to a digital subscriber line (Digital Subscriber Line, hereinafter referred to as DSL for short) and attacks an SSL server by requesting an encryption key again.

In the attack manner, because an overhead of a central processing unit (central processing unit, hereinafter referred to as CPU for short) of the SSL server is about 15 times of that of a client when an encryption algorithm is negotiated, such kind of attack behavior consumes CPU resources of the server seriously. However, no effective method that can perform defense against an SSL DOS attack behavior exists at present.

THC: "thc-ssl-dos" ( 25 October 2011, https://www.thc.org/thc-ssl-dos/) discloses a tool named THC-SSL-DOS to verify the performance of SSL. Traditional DDoS attacks based on flooding are sub optimal: Servers are prepared to handle large amount of traffic and clients are constantly sending requests to the server even when not under attack. The SSL-handshake is only done at the beginning of a secure session and only if security is required. Server are not prepared to handle large amount of SSL Handshakes. The worst attack scenario is an SSL-Exhaustion attack mounted from thousands of clients. No real solution exists. Disable SSL-Renegotiation and install SSL Accelerator can mitigate the problem, but not solve the problem.

Vincent Bernat: "SSL computational DoS mitigation", 4 November 2011, recognizes there is no definitive solution to SSL computational DoS and discuss about some workarounds, for instance, disabling SSL renegotiation, rate limiting SSL handshakes, increasing server-side power processing and putting more work on the client side.

### SUMMARY

Embodiments of the present invention provide an attack defense method and device, so as to effectively perform defense against a secure socket layer (Secure Socket Layer, hereinafter referred to as SSL for short) denial of service (Denial of Service, hereinafter referred to as DOS for short) attack behavior.

In a first aspect, an embodiment of the present invention provides an attack defense method, including:
monitor a transmission control protocol (TCP) connection established between a client and a SSL server;
counting a number of renegotiations in the TCP connection, where the number of the renegotiations is a number of repeated negotiations between the client and the server in the TCP connection;
when the number of the renegotiations in the TCP connection is greater than a preset threshold of the number of renegotiations, determining that the TCP connection is an abnormal connection; and
disconnecting the TCP connection;
wherein the method further includes:
determining whether an IP address of the client in the transmission control protocol TCP connection is in a blacklist, where the blacklist includes an IP address of a client which initiates an abnormal connection;
when the IP address of the client is not in the blacklist, entering the step of counting the number of the renegotiations in the TCP connection; and
when the IP address of the client is in the blacklist, disconnecting the TCP connection.

In a first possible implementation of the first aspect, the counting the number of the renegotiations in the TCP connection includes:
through a type of a packet exchanged between the client and the server in the TCP connection, identifying whether the packet is a negotiation packet; and
counting the number of the renegotiations in the TCP connection according to the number of negotiation packets in the TCP connection.

In combination with the first possible implementation of the first aspect, in a second possible implementation of the first aspect, the negotiation packet includes a packet of a Change Cipher Spec type.

In a third possible implementation of the first aspect, the counting the number of the renegotiations in the TCP connection includes:
obtaining the number of the renegotiations in the TCP connection by counting the number of negotiation packets of the Change Cipher Spec type that are exchanged between the client and an SSL server in the TCP connection.

In combination with the first aspect, the first possible implementation of the first aspect, the second possible implementation of the first aspect, or the third possible implementation of the first aspect, in a fourth possible implementation of the first aspect, the attack defense method provided in the present invention further includes:
counting the number of abnormal connections initiated by the client in the TCP connection; and
when the number of the abnormal connections initiated by the client is greater than a preset threshold of the number of connections, adding the IP address of the client into the blacklist.

In a second aspect, an embodiment of the present invention provides an attack defense device, including:
a module configured to monitor a TCP connection established between a client and a SSL server;
a first counting module, configured to count a number of renegotiations in the TCP connection, where the number of the renegotiations is a number of repeated negotiations between the client and the server in the TCP connection;
an abnormal connection determining module, configured to, when the number of the renegotiations in the TCP connection is greater than a preset threshold of the number of renegotiations, determine that the TCP connection is an abnormal connection; and
a processing module, configured to disconnect the TCP connection;
wherein the attack defense device further includes:
a judging module, configured to determine whether an IP address of the client in the TCP connection is in a blacklist, where the blacklist includes an IP address of a client which initiates an abnormal connection, trigger the first counting module when the IP address of the client is not in the blacklist, and trigger the processing module when the IP address of the client is in the blacklist.

In a first possible implementation of the second aspect, the first counting module includes:
an identifying unit, configured to, through a type of a packet exchanged between the client and the server in the TCP connection, identify whether the packet is a negotiation packet; and
a counting unit, configured to count the number of the renegotiations in the TCP connection according to the number of negotiation packets in the TCP connection that are identified by the identifying unit.

In combination with the first possible implementation of the second aspect, in a second possible implementation of the second aspect, the negotiation packet includes a packet of a Change Cipher Spec type.

In a third possible implementation of the second aspect, the first counting module is specifically configured to obtain the number of the renegotiations in the TCP connection by counting the number of negotiation packets of the Change Cipher Spec type that are exchanged between the client and an SSL server in the TCP connection.

In combination with the second aspect, the first possible implementation of the second aspect, the second possible implementation of the second aspect, or the third possible implementation of the second aspect, in a fourth possible implementation of the second aspect, the attack defense device provided in the present invention further includes:
a judging module, configured to determine whether an IP address of the client in the TCP connection is in a blacklist, where the blacklist includes an IP address of a client which initiates an abnormal connection, trigger the first counting module when the IP address of the client is not in the blacklist, and trigger the processing module when the IP address of the client is in the blacklist.

In combination with the second aspect, the first possible implementation of the second aspect, the second possible implementation of the second aspect, or the third possible implementation of the second aspect, in a fourth possible implementation of the second aspect, the attack defense device provided in the present invention further includes:
a second counting module, configured to count the number of abnormal connections initiated by the client in the TCP connection; and
a managing module, configured to, when the number of the abnormal connections initiated by the client in the TCP connection that is counted by the second counting module is greater than a preset threshold of the number of connections, add the IP address of the client into the blacklist.

In this embodiment, according to a feature that an SSL DOS attack consumes a server CPU by negotiating repeatedly continuously, the number of renegotiations in a TCP connection is counted, and when the counted number of the renegotiations in the TCP connection is greater than a threshold of the number of renegotiations, it is determined that the TCP connection is an abnormal connection, and the TCP connection is disconnected, thereby effectively implementing defense against an SSL DOS attack behavior and protecting the server from the SSL DOS attack.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic diagram of application network architecture of an attack defense method according to an embodiment of the present invention;
FIG. 2 is a flow chart of an attack defense method according to an embodiment of the present invention;
FIG. 3 is a flow chart of another attack defense method according to an embodiment of the present invention;
FIG. 4 is a flow chart of still another attack defense method according to an embodiment of the present invention;
FIG. 5 is a schematic structural diagram of an attack defense device according to an embodiment of the present invention;
FIG. 6 is a schematic structural diagram of another attack defense device according to an embodiment of the present invention; and
FIG. 7 is a schematic structural diagram of another attack defense device according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiment of the present invention without creative efforts shall fall within the protection scope of the present invention.

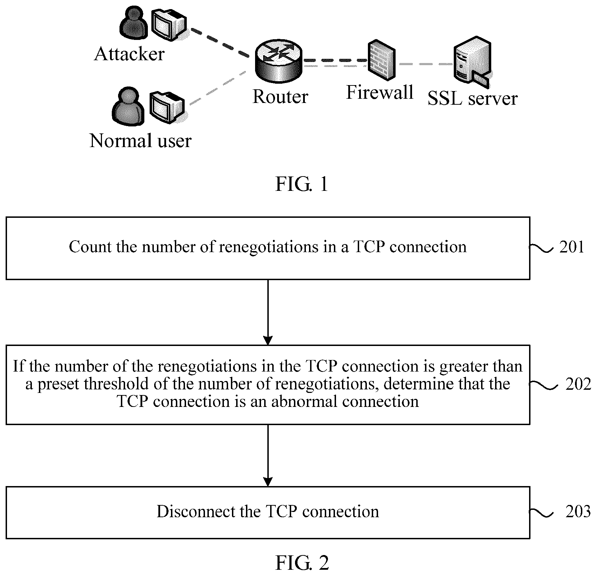

An attack defense method provided in this embodiment may be implemented on a gateway product, where the gateway product is deployed in front of a secure socket layer (Secure Socket Layer, hereinafter referred to as SSL for short) server, thereby implementing protection of the SSL server; and may also be deployed on an SSL server in the form of software to perform detection on an SSL request, thereby preventing an SSL denial of service (Denial of Service, hereinafter referred to as DOS for short) attack behavior. FIG. 1 is a schematic diagram of application network architecture of an attack defense method according to an embodiment of the present invention. As shown in FIG. 1, an attacker may use a general computer to interact with an SSL server like a normal user. The attacker establishes a transmission control protocol (Transmission Control Protocol, hereinafter referred to as TCP for short) connection with the SSL server, and then repeatedly negotiates a key rapidly without a stop in the established TCP connection, so as to attack the SSL server. Here, the attacker may initiate an attack on the SSL server through one established TCP connection with the SSL server, and may also initiate an attack on the SSL server through multiple established TCP connections with the SSL server. Definitely, the larger the number of TCP connections is, the heavier the damage to the SSL server is. Moreover, there may also be multiple attackers. The attack defense method in this embodiment may be implemented on a gateway product such as a router or a firewall, may also be implemented through a router and a firewall, and may also be applied to a distributed denial of service (Distributed Denial of service, hereinafter referred to as DDOS for short) cleaning device, where, the gateway product such as the router or the firewall or the DDOS cleaning device is deployed in the front of an SSL server, thereby being capable of blocking an attack on the SSL server initiated by an attacker.

FIG. 2 is a flow chart of an attack defense method according to an embodiment of the present invention. As shown in FIG. 2, this embodiment provides an attack defense method. The attack defense method may be used for defense against a secure socket layer (Secure Socket Layer, hereinafter referred to as SSL for short) denial of service (Denial of service, hereinafter referred to as DOS for short) attack. It can be understood that, in an actual application, a same client may also establish multiple connections with a server. To describe clearly, the embodiment of the present invention takes one TCP connection established between a client and a server as an example for description. The method may include the following steps.

Step 201: Count the number of renegotiations in a transmission control protocol TCP connection.

In an actual application, when a client and a server interact with each other normally, only one TCP connection may exists between the client and the server, or multiple TCP connections may exists at the same time. An attacker may attack the server through one established TCP connection with the server and may also attack the server through multiple established TCP connections with the server. When multiple TCP connections are established with the server, each TCP connection may be monitored separately, and the number of renegotiations between the client and the server in each TCP connection may be counted separately. The embodiment of the present invention takes one TCP connection established between a client and an SSL server as an example for description. Specifically, monitoring may be performed on one TCP connection and the number of renegotiations in the TCP connection may be counted, where the number of the renegotiations is the number of repeated negotiations between the client and the server in the TCP connection.

One negotiation packet of the change cipher specification Change Cipher Spec type exists along with each process of key negotiation between the client and the SSL server in one TCP connection, where a first negotiation is a normal negotiation and the other non-first negotiation is a repeated negotiation; therefore, when the number of renegotiations in the transmission control protocol TCP connection is counted, whether the packet is a negotiation packet may be identified through a type of a packet exchanged between the client and the server in the TCP connection, and the number of the renegotiations in the TCP connection may be counted according to the number of negotiation packets in the TCP connection. Specifically, the number of the renegotiations in the TCP connection may be obtained by counting the number of negotiation packets of the Change Cipher Spec type that are exchanged between the client and the SSL server in the TCP connection.

Because the SSL DOS attack refers to that an attacker rapidly initiates repeated negotiations within a short time after establishing a connection with the server so as to attack the server, the number of renegotiations in the TCP connection within a preset time may be obtained according to a difference between the number of negotiation packets in the TCP connection within the preset time and 1.

Step 202: If the number of the renegotiations in the TCP connection is greater than a preset threshold of the number of renegotiations, determine that the TCP connection is an abnormal connection.

Specifically, the threshold of the number of renegotiations is a preset maximum number of renegotiations allowed within a certain time in one TCP connection. In a normal case, the number of renegotiations in one TCP connection within a preset time does not exceed the threshold of the number of renegotiations; when the number of the renegotiations exceeds the threshold of the number of renegotiations, it indicates that a renegotiation process in the TCP connection may be an attack initiated by an external malicious attacker, and then it is determined that the TCP connection is an abnormal connection. It can be understood that, in an actual application, if multiple TCP connections exist, whether the number of renegotiations in each TCP connection is greater than the preset threshold of the number of renegotiations may be determined separately, so as to separately determine whether each TCP connection is an abnormal connection.

Step 203: Disconnect the TCP connection.

When it is determined that the TCP connection is an abnormal connection, in order to ensure that the server is protected against a hacker attack, the TCP connection is disconnected.

It can be understood that, in the embodiment of the present invention, the number of negotiations in the TCP connection may be obtained by directly counting the number of negotiation packets in the TCP connection, and whether the TCP connection is an abnormal connection may also be determined according to a set threshold of the number of negotiations. Specifically, in step 201, the number of the negotiations may be obtained directly according to the number of negotiation packets of a Change Cipher Spec type that are exchanged between the client and the SSL server in the TCP connection within a preset time period. In step 202, whether the number of the negotiations in the TCP connection is greater than the preset threshold of the number of negotiations may be determined, where the threshold of the number of negotiations is a preset number of negotiations allowed within the set time period in one TCP connection.

In this embodiment, according to a feature that an SSL DOS attack consumes server CPU resources by continuously renegotiating a key in an established TCP connection, the number of renegotiations in the TCP connection is counted, and when the counted number of the renegotiations in the TCP connection is greater than a threshold of the number of renegotiations, it is determined that the TCP connection is an abnormal connection, and the TCP connection is disconnected, thereby effectively implementing defense against an SSL DOS attack behavior and protecting the server from the SSL DOS attack.

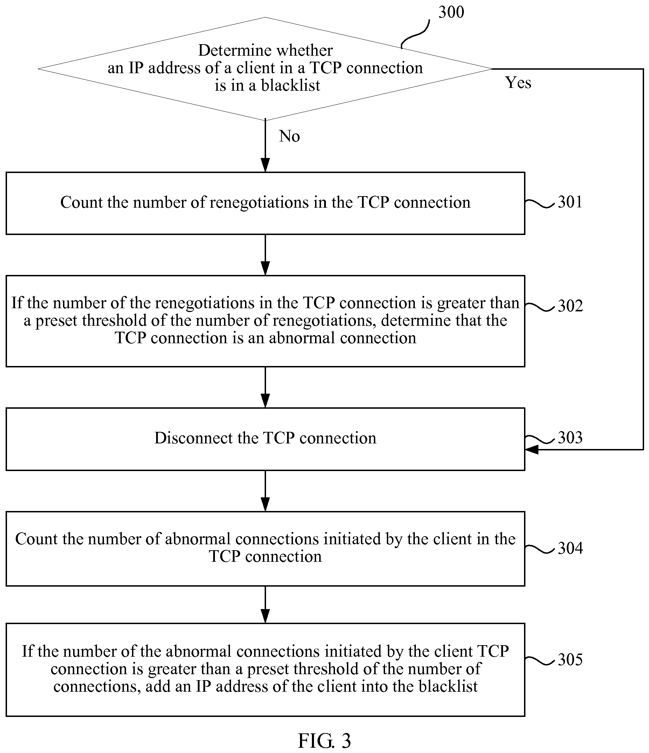

FIG. 3 is a flow chart of another attack defense method according to an embodiment of the present invention. The embodiment of the present invention still takes one TCP connection established between a client and an SSL server as an example for description. It can be understood that, in an actual application, when multiple TCP connections exist between the client and the SSL server, each TCP connection may be processed with reference to the method described in this embodiment. As shown in FIG. 3, the method includes:
Step 300: Determine whether an IP address of a client in a TCP connection is in a blacklist; if the IP address of the client is in the blacklist, enter step 303, otherwise, enter step 301.

Specifically, an attacker blacklist may be preset in a gateway product such as a router or a firewall, or in a DDOS cleaning device. The blacklist includes a detected IP address of an attacker. When a packet sent by the client is received, whether the IP address of the client in the TCP connection is in the preset blacklist may be determined according to a source IP address carried in the packet. If the IP address is not in the blacklist, enter step 301, otherwise, enter step 303, where the TCP connection is directly disconnected.

It should be noted that, in a case that the IP address of the client in the TCP connection is in the blacklist, after entering step 303 to disconnect the TCP connection, it is unnecessary to enter step 304 to count the number of abnormal connections initiated by the client in the TCP connection. In such case, it is already determined according to the blacklist that the client is an attacker, so it is unnecessary to further determine whether to add the IP address of the client into the blacklist.

Step 301: Count the number of renegotiations in the TCP connection, and enter step 302.

Specifically, one negotiation packet of a change cipher specification Change Cipher Spec type exists along with each process of key negotiation between a client and an SSL server in one TCP connection, where a first negotiation is a normal negotiation and the other non-first negotiation is a repeated negotiation; therefore, the number of the renegotiations in the TCP connection may be obtained by counting the number of negotiation packets of the Change Cipher Spec type that are exchanged between the client and the SSL server in the TCP connection. Because the SSL DOS attack refers to that an attacker rapidly initiates repeated negotiations within a short time after establishing a connection with the server so as to attack the server, the number of renegotiations in the TCP connection within a preset time may be obtained according to a difference between the number of negotiation packets in the TCP connection within the preset time and 1. For example, if the number of negotiation packets of the Change Cipher Spec type that appear in a certain TCP connection within one hour is 10, it may be obtained that the number of renegotiations in the TCP connection within the one hour is 9.

Specifically, in an actual application, when the number of renegotiations in the TCP connection within a preset time is counted, a time for counting may be preset. In an actual application, a counting period may be set to 30s or 1 minute. The specific time setting may be performed according to an actual service requirement and may also be determined according to network traffic. During the counting, when a negotiation packet is received, the number of negotiation packets is recorded once and one time stamp is recorded, so that when a negotiation packet is received subsequently, the counting period may be determined according to the previously recorded time stamp, and the number of renegotiations within the counting period may be counted according to the determined counting period. For example, when a first negotiation packet is received, the number of negotiation packet is recorded as 1 and one time stamp is recorded, and when a second negotiation packet is received, 1 is added to the number of negotiation packet and a second time stamp is recorded, so that the number of negotiation packets received within this period of time may be determined according to the two recorded time stamps.

Step 302: If the number of the renegotiations in the TCP connection is greater than a preset threshold of the number of renegotiations, determine that the TCP connection is an abnormal connection, and enter step 303.

Here, the threshold of the number of renegotiations is a preset maximum number of renegotiations allowed within a certain time in one TCP connection. In a normal case, the number of renegotiations in one TCP connection within a preset time does not exceed the threshold of the number of renegotiations; when the number of the renegotiations exceeds the threshold of the number of renegotiations, it indicates that a renegotiation process in the TCP connection may be an attack initiated by an external malicious attacker, and then it is determined that the TCP connection is an abnormal connection. For example, it is preset that the maximum number of renegotiations within one hour in one TCP connection is 10, the threshold of the number of renegotiations of the TCP connection is set to 10. When the number of renegotiations in the TCP connection exceeds 10 within one hour, the TCP connection is taken as an abnormal connection. Definitely, it can be understood that, the threshold of the number of renegotiations is determined according to an empirical value of the normal number of negotiations which may exist in one normal TCP connection in an actual application. During specific determination, the setting may be performed according to a service requirement or network traffic. In an actual application, the threshold of the number of renegotiations may be set to three times per thirty seconds (3 times/30s).

Step 303: Disconnect the TCP connection, and enter step 304.

In step 302, when it is determined that the TCP connection is an abnormal connection, the TCP connection may be disconnected, so as to prevent the attacker from performing the SSL DOS attack on the SSL server through the TCP connection. Specifically, the TCP connection may be disconnected by sending bidirectional reset (Reset, hereinafter referred to as RST for short) packets, that is, sending a RST packet to a client which a source IP address points to in the TCP connection and sending a RST packet to a server which a destination IP address points to in the TCP connection, so as to disconnect the TCP connection between the client and the SSL server.

Step 304: Count the number of abnormal connections initiated by the client in the TCP connection, and enter step 305.

After it is determined that the TCP connection is an abnormal connection, and the TCP connection is disconnected, monitoring may be performed on the IP address of the client in the TCP connection, so as to further determine whether the client in the TCP connection is an attacker. Specifically, an abnormal connection monitoring table may be established. The abnormal connection monitoring table records an IP address of a client and the number of the abnormal connections initiated by the client which the IP address points to. Specifically, after identifying that a certain TCP connection is an abnormal connection in step 302, the abnormal connection monitoring table may be searched for an IP address which is the same as the IP address of the client in the TCP connection. If an IP address which is the same as the IP address of the client is found, 1 is added to the number of abnormal connections corresponding to the IP address. If the same IP address is not found, a new record is added into the abnormal connection monitoring table, the IP address is recorded, and the number of abnormal connections corresponding to the IP address is recorded as 1. It can be understood that, the counting the number of the abnormal connections initiated by the client in the TCP connection also refers to counting the number of abnormal connections within a set counting period. Specifically, when one abnormal connection is determined, one time stamp may be recorded, a counting period is determined according to the recorded time stamp, and the number of the abnormal connections within the set counting period is counted. For a specific counting method, reference may be made to the description of the counting the number of renegotiations in step 301, which is not described in detail again herein.

Step 305: If the number of the abnormal connections initiated by the client in the TCP connection is greater than a preset threshold of the number of connections, add the IP address of the client into the blacklist.

Specifically, the threshold of the number of connections may be a maximum number of abnormal connections initiated by the client which the IP address points to that is allowed within a preset time. When the number of the abnormal connections initiated by the client in the TCP connection that is counted in step 304 is greater than the preset threshold of the number of connections, it is determined that the client is an attacker, and the IP address of the client is added into the blacklist, so as to dynamically update the blacklist. In this case, next time when a packet sent from the IP address is received, the packet may be directly discarded, or a TCP connection initiated by the IP address may be directly disconnected, thereby improving detection efficiency. Here, the set blacklist records a detected IP address of an attacker.

It can be understood that, in the embodiment of the present invention, the number of negotiations in the TCP connection may be obtained by directly counting the number of negotiation packets in the TCP connection, and whether the TCP connection is an abnormal connection may be determined according to a set threshold of the number of negotiations. Specifically, in step 301, the number of the negotiations may be obtained directly according to the number of negotiation packets of the Change Cipher Spec type that are exchanged between the client and the SSL server in the TCP connection within a preset time period. In step 302, whether the number of the negotiations in the TCP connection is greater than a preset threshold of the number of negotiations may be determined, where the threshold of the number of negotiations is the preset number of negotiations allowed within a set time period in one TCP connection.

In the attack defense method in the embodiment of the present invention, before the number of renegotiations in a TCP connection is counted, first, whether an IP address of a client in the TCP connection is in a blacklist is determined; if the IP address is in the blacklist, the TCP connection is directly disconnected; if the IP address is not in the blacklist, whether the TCP connection is an abnormal connection is determined by counting the number of renegotiations in the TCP connection; if the TCP connection is an abnormal connection, the TCP connection is disconnected and the number of abnormal connections initiated by the client in the TCP connection is recorded in a set abnormal connection monitoring table; and when the number of the abnormal connections initiated by the client in the TCP connection exceeds a preset threshold of the number of connections, the IP address of the client is added into the blacklist, so as to update the set blacklist in time, thereby not only being capable of preventing the client from initiating an SSL DOS attack on an SSL server, but also being capable of improving defense efficiency.

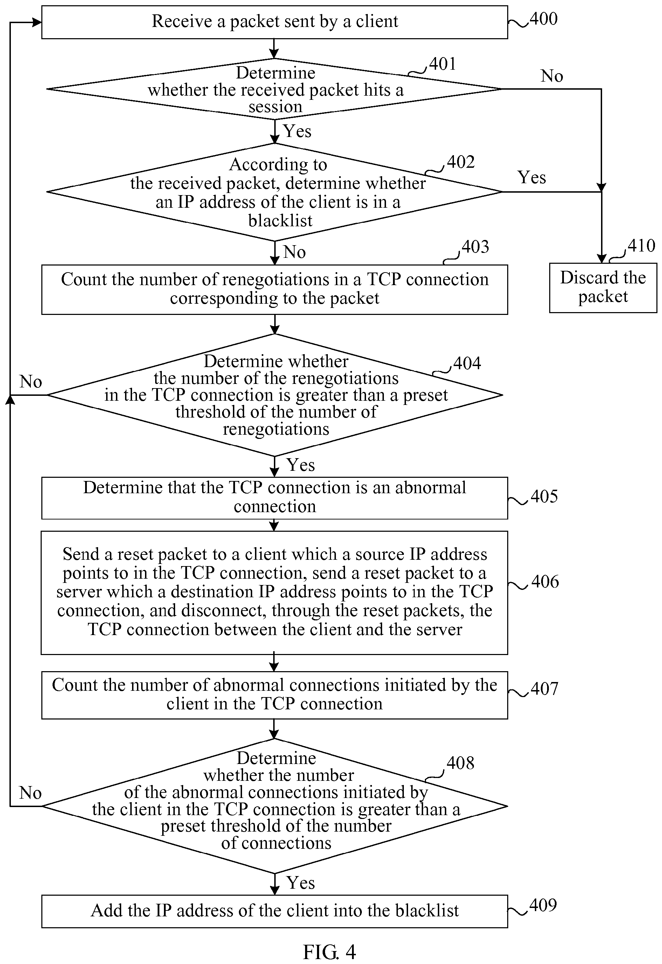

FIG. 4 is a flow chart of another attack defense method according to an embodiment of the present invention. As shown in FIG. 4, this embodiment provides an attack defense method, which may specifically include the following steps.

Step 400: Receive a packet sent by a client, and enter step 401.

Step 401: Determine whether the received packet matches a session; if yes, perform step 402, otherwise, perform step 410.

After a packet sent by a client is received, whether the packet matches a session is determined. Specifically, whether an established session is hit may be determined according to quintuple information of the packet, where the quintuple information is: a source IP address, a destination IP address, a source port, a destination port, and a protocol type. If the session is hit, it indicates that the source IP address of the packet is a real IP address, and then, step 402 is performed. If the session is not hit, it indicates that the source IP address of the packet is a virtual IP address, and then, step 410 may be performed, and the packet is discarded.

Step 402: According to the received packet, determine whether an IP address of the client is in a blacklist; if yes, perform step 410, otherwise, perform step 403.

When the received packet matches the session, whether the IP address of the client which sends the packet is in a blacklist is further determined, so as to prevent an attacker from utilizing a real IP address to initiate an attack on the server, where the blacklist records a detected IP address of an attacker. If yes, step 410 is performed and the packet is discarded; otherwise, step 403 is performed. Step 403: Count the number of renegotiations in a TCP connection corresponding to the packet, and enter step 404.

This step refers to that, when the IP address of the client which sends the packet is not in the blacklist, a TCP connection established between a client which the IP address of the client points to and an SSL server is monitored, so as to count the number of the renegotiations in the TCP connection corresponding to the received packet. During identification of a renegotiation behavior in the TCP connection, the identifying may be performed specifically through a packet exchanged between the client and the SSL server in the TCP connection. One negotiation packet of a Change Cipher Spec type exists along with each renegotiation process between the client and the SSL server in one TCP connection, where a first negotiation is a normal negotiation and the other non-first negotiation is a repeated negotiation; therefore, in this embodiment, whether the packet is a negotiation packet may be determined by determining whether the type of the received packet is the Change Cipher Spec type. Further, because the SSL DOS attack refers to that an attacker rapidly initiates repeated negotiations within a short time after establishing a connection with the server so as to attack the server, the number of renegotiations in the TCP connection may be obtained according to a difference between the number of negotiation packets in the TCP connection within a preset time and 1. For example, if the number of negotiation packets of the Change Cipher Spec type that appear in a certain TCP connection within one hour is 10, it may be obtained that the number of renegotiations in the TCP connection within the one hour is 9.

Specifically, in an actual application, when the number of renegotiations in the TCP connection within a preset time is counted, a time for counting may be preset. In an actual application, a counting period may be set to 30s or 1 minute. The specific time setting may be performed according to an actual service requirement and may also be determined according to network traffic. During the counting, when a negotiation packet is received, the number of negotiation packets is recorded once and one time stamp is recorded, so that when a negotiation packet is received subsequently, a counting period may be determined according to the previously recorded time stamp, and the number of renegotiations within the counting period may be counted according to the determined counting period. For example, when a first negotiation packet is received, the number of negotiation packet is recorded as 1 and one time stamp is recorded, and when a second negotiation packet is received, 1 is added to the number of negotiation packet and a second time stamp is recorded, so that the number of negotiation packets received within this period of time may be determined according to the two recorded time stamps.

Step 404: Determine whether the number of the renegotiations in the TCP connection is greater than a preset threshold of the number of renegotiations; if yes, perform step 405, otherwise, return to perform step 400.

After the counting process in step 403, whether the counted number of the renegotiations in the TCP connection is greater than the preset threshold of the number of the renegotiations is determined. Specifically, whether the number of the renegotiations in the TCP connection is greater than the preset threshold of the number of renegotiations may be determined after each time when the number of the renegotiations in the TCP connection is updated. For example, when it is determined that the received packet is a negotiation packet of the Change Cipher Spec type, 1 is added to the number of negotiation packets in the TCP connection to which the packet belongs, that is, 1 is added to the number of the renegotiations in the TCP connection accordingly. If the updated number of the renegotiations is greater than the preset threshold of the number of renegotiations, step 405 may be performed, and it is determined that the TCP connection is an abnormal connection; otherwise, return to perform step 400, and continue to receive another packet sent by the client.

In this embodiment, before step 403 is performed, the method may further include: pre-configuring the threshold of the number of renegotiations and a threshold of the number of connections. Specifically, the two thresholds may be set according to an actual situation. Here, the threshold of the number of renegotiations refers to a user-configured allowed maximum number of renegotiations within a set time period, and the threshold of the number of connections refers to a user-configured allowed maximum number of abnormal connections within the set time period. During specific determination, the setting may be performed according to a service requirement or network traffic. In an actual application, the threshold of the number of renegotiations may be set to three times per thirty seconds (3 times/30s), and the threshold of the number of connections may be set to three times per fifteen seconds (3 times/15s).

Step 405: Determine that the TCP connection is an abnormal connection, and enter step 406.

When the number of the renegotiations in the TCP connection is greater than the preset threshold of the number of renegotiations, it indicates that a renegotiation process in the TCP connection may be initiated by a hacker of an external malicious attack, and it may be determined that the TCP connection is an abnormal connection. For example, it is preset that the maximum number of renegotiations within one hour in one TCP connection is 10, the threshold of the number of renegotiations of the TCP connection is set to 10. When the number of renegotiations in the TCP connection exceeds 10 within one hour, the TCP connection is taken as an abnormal connection. Definitely, it can be understood that, the threshold of the number of renegotiations is determined according to an empirical value of the normal number of negotiations which may exist in a normal TCP connection in an actual application.

Step 406: Send a reset packet to a client which the source IP address points to in the TCP connection, send a reset packet to a server which the destination IP address points to in the TCP connection, disconnect, through the reset packets, the TCP connection between the client and the server, and enter step 407.

In this embodiment, when it is determined that one TCP connection is an abnormal connection, the TCP connection may be disconnected, so as to prevent an attacker from performing an SSL DOS attack on the SSL server through the TCP connection. The TCP connection may be disconnected by sending RST packets. In this step, after it is determined that one TCP connection is an abnormal connection, an RST packet is sent to a client which a source IP address points to in the TCP connection and an RST packet is sent to a server which a destination IP address points to in the TCP connection. The client automatically disconnects the corresponding TCP connection after receiving the RST packet and the server automatically disconnects the corresponding TCP connection after receiving the RST packet, so that the TCP connection between the client and the SSL server is disconnected through the RST packets.

Step 407: Count the number of abnormal connections initiated by the client in the TCP connection, and enter step 408.

After it is determined that the TCP connection is an abnormal connection, and the TCP connection is disconnected, monitoring may be performed on the IP address of the client in the TCP connection, so as to further determine whether the client in the TCP connection is an attacker. Specifically, an abnormal connection monitoring table may be established. The abnormal connection monitoring table records the number of the abnormal connections initiated by the client. In this embodiment, after it is determined that the TCP connection is an abnormal connection, if the TCP connection is a first abnormal connection initiated by the client in the TCP connection, it is necessary to establish an abnormal connection monitoring table, so as to monitor the IP address of the client in the TCP connection and count the number of the abnormal connections initiated by the client. Definitely, if the TCP connection is not the first abnormal connection initiated by the client, the number of the abnormal connections initiated by the client may be updated in the abnormal connection monitoring table. It can be understood that, the counting the number of the abnormal connections initiated by the client in the TCP connection is also counting the number of abnormal connections within a set counting period. Specifically, when one abnormal connection is determined, one time stamp may be recorded, a counting period is determined according to the recorded time stamps, and the number of abnormal connections within the set counting period is counted. In addition, in this embodiment, when it is detected that a certain TCP connection is an abnormal connection, the detection result may also be recorded as log information in a log for use in subsequent querying.

Step 408: Determine whether the number of the abnormal connections initiated by the client in the TCP connection is greater than a preset threshold of the number of connections; if yes, perform step 409, otherwise, return to perform step 400.

Whether the counted number of the abnormal connections initiated by the client in the TCP connection is greater than the preset threshold of the number of connections is determined. If yes, perform step 409 and add the IP address of the client into the blacklist; otherwise, return to perform step 400 and continue to receive a packet sent by the client.

Step 409: Add the IP address of the client into the blacklist.

When the counted number of the abnormal connections initiated by the client in the abnormal connection monitoring table is greater than the preset threshold of the number of connections, it indicates that the client may be an attacker, and the IP address of the client is added into the blacklist, so as to dynamically update the blacklist. Next time when a packet sent from the IP address is received, the packet may be directly discarded, or a TCP connection initiated by the IP address may be directly disconnected, thereby improving detection efficiency. In this embodiment, when it is detected that a certain IP address is added into the blacklist, the detection result may also be recorded as log information in a log for use in subsequent querying.

Step 410: Discard the packet.

When a packet is received from the client, and if the packet does not hit a session or a source IP address of the packet is in the blacklist, the packet is discarded.

This embodiment provides an attack defense method. After a packet sent by a client is received, first, whether the packet matches a session is determined; if the session is hit, whether an IP address of the client is in a blacklist continues to be determined according to the received packet; if the IP address is not in the blacklist and the counted number of renegotiations in a TCP connection is greater than a threshold of the number of renegotiations, it is determined that the TCP connection is an abnormal connection, the TCP connection is disconnected, and the number of abnormal connections initiated by the client in the TCP connection is recorded in a set abnormal connection monitoring table; and when the number of the abnormal connections initiated by the client in the TCP connection exceeds a preset threshold of the number of connections, the IP address of the client is added into the blacklist, so as to update the set blacklist in time, thereby not only being capable of preventing the client from initiating an SSL DOS attack on an SSL server, but also being capable of improving defense efficiency.

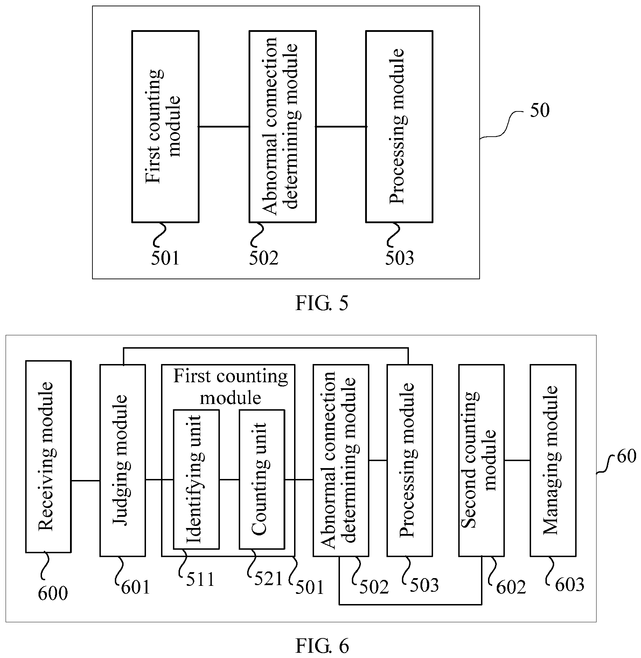

Persons of ordinary skill in the art should understand that all or part of the steps of the method in the embodiments may be implemented by a program instructing relevant hardware. The program may be stored in a computer readable storage medium. When the program is run, the above steps of the method in the embodiment are performed. The storage medium may be any medium capable of storing program codes, such as a ROM, a RAM, a magnetic disk, or an optical disk, and the like. FIG. 5 is a schematic structural diagram of an attack defense device according to an embodiment of the present invention. As shown in FIG. 5, this embodiment provides an attack defense device 50. The attack defense device 50 may be used for defense against a secure socket layer (Secure Socket Layer, hereinafter referred to as SSL for short) denial of service (Denial of service, hereinafter referred to as DOS for short) attack behavior. The attack defense device 50 may include a first counting module 501, an abnormal connection determining module 502, and a processing module 503.

The first counting module 501 is configured to count the number of renegotiations in a transmission control protocol (Transmission Control Protocol, hereinafter referred to as TCP for short) connection, where the number of the renegotiations is the number of repeated negotiations between a client and a server in the TCP connection.

One negotiation packet of a change cipher specification Change Cipher Spec type exists along with each process of key negotiation between a client and an SSL server in one TCP connection, where a first negotiation is a normal negotiation and the other non-first negotiation is a repeated negotiation; therefore, the number of the renegotiations in the TCP connection that is counted by the first counting module 501 may be identified by counting the number of negotiation packets of the Change Cipher Spec type that are exchanged between the client and the SSL server in the TCP connection. Specifically, the number of the renegotiations in the TCP connection may be obtained by subtracting 1 from the number of negotiation packets in the TCP connection within a preset time. Specifically, in an actual application, when the first counting module 501 counts the number of renegotiations in the TCP connection within the preset time, a counting period may be preset. That is, the number of renegotiations within the preset counting period is counted. In an actual application, the counting period may be set to 30s or 1 minute. The specific time setting may be performed according to an actual service requirement and may also be determined according to network traffic. During the counting, when a negotiation packet is received, the number of negotiation packets is recorded once and one time stamp is recorded, so that when a negotiation packet is received subsequently, a counting period may be determined according to the previously recorded time stamp, and the number of renegotiations within the counting period may be counted according to the determined counting period. For example, when a first negotiation packet is received, the number of negotiation packet is recorded as 1 and one time stamp is recorded, and when a second negotiation packet is received, 1 is added to the number of negotiation packet, and a second time stamp is recorded, so that the number of negotiation packets received within this period of time may be determined according to the two recorded time stamps.

The abnormal connection determining module 502 is configured to, when the number of the renegotiations in the TCP connection that is counted by the first counting module 501 is greater than a preset threshold of the number of renegotiations, determine that the TCP connection is an abnormal connection.

Specifically, the threshold of the number of renegotiations is a preset maximum number of renegotiations allowed within a certain time in one TCP connection. In a normal case, the number of renegotiations in one TCP connection within a preset time does not exceed the threshold of the number of renegotiations; when the number of renegotiations exceeds the threshold of the number of renegotiations, it indicates that a renegotiation process in the TCP connection may be an attack initiated by an external malicious attacker, and then the abnormal connection determining module 502 determines that the TCP connection is an abnormal connection. In an actual application, the threshold of the number of renegotiations may be set according to a service requirement or network traffic. For example, the threshold of the number of renegotiations may be set to three times per thirty seconds (3 times/30s).

The processing module 503 is configured to, when the abnormal connection determining module 502 determines that the TCP connection is an abnormal connection, disconnect the TCP connection. Specifically, when the abnormal connection determining module 502 determines that the TCP connection is an abnormal connection, in order to ensure that the server is protected from a hacker attack, the TCP connection is disconnected.

The attack defense device 50 provided in this embodiment may specifically perform relevant steps in the method embodiments shown in FIG. 2 to FIG. 4.

The attack defense device in the embodiment of the present invention, according to a feature that an SSL DOS attack is performed by an attacker by consuming server CPU resources by continuously negotiating a key in an established TCP connection with the server repeatedly, counts the number of renegotiations in the TCP connection, determines that the TCP connection is an abnormal connection when the counted number of renegotiations in the TCP connection is greater than a threshold of the number of renegotiations, and disconnects the TCP connection, thereby effectively implementing defense against an SSL DOS attack behavior and protecting the server from the SSL DOS attack.

FIG. 6 is a schematic structural diagram of another attack defense device according to an embodiment of the present invention. As shown in FIG. 6, this embodiment provides an attack defense device 60, which may specifically perform relevant steps in the method embodiments shown in FIG. 2 to FIG. 4, which is not described in detail again herein. Based on the embodiment shown in FIG. 5, the attack defense device 60 provided in this embodiment may further include a judging module 601.

The judging module 601 is configured to determine whether an IP address of the client in the TCP connection is in a blacklist, where the blacklist includes an IP address of a client which initiates an abnormal connection, trigger the first counting module 501 when the IP address of the client is not in the blacklist, and trigger the processing module 503 when the IP address of the client is in the blacklist.

Specifically, an attacker blacklist may be preset in the attack defense device. The blacklist includes a detected IP address of an attacker, where, the attack defense device in this embodiment may be a gateway product such as a router or a firewall, or may be a network device such as a DDOS cleaning device. When a packet sent by the client is received, the judging module 601 may determine, according to a source IP address carried in the packet, whether the IP address of the client in the TCP connection is in the preset blacklist; if not, trigger the first counting module 501, otherwise, trigger the processing module 503 and directly disconnect the TCP connection, thereby improving attack defense efficiency.

Further, the attack defense device provided in this embodiment may further include a second counting module 602 and a managing module 603.

The second counting module 602 is configured to count the number of abnormal connections initiated by the client in the TCP connection.

Specifically, an abnormal connection monitoring table may be established in the attack defense device, and is used to count the number of abnormal connections initiated by the client. The abnormal connection monitoring table records an IP address of a client and the number of abnormal connections initiated by the client which the IP address points to. Specifically, after the abnormal connection determining module 502 determines that a certain TCP connection is an abnormal connection, the second counting module 602 may search the abnormal connection monitoring table for an IP address which is the same as an IP address of a client in the TCP connection and count the number of abnormal connections under the IP address. Specifically, if the IP address which is the same as the IP address of the client is found, the second counting module 602 adds 1 to the number of abnormal connections corresponding to the IP address. If the same IP address is not found, the second counting module 602 adds a new record into the abnormal connection monitoring table, records the IP address, and records the number of abnormal connections corresponding to the IP address as 1.

It can be understood that, the counting the number of abnormal connections initiated by the client in the TCP connection also refers to counting the number of abnormal connections within a set counting period. Specifically, when one abnormal connection is determined, one time stamp may be recorded, a counting period is determined according to the recorded time stamps, and the number of abnormal connections within the set counting period is counted. For a specific counting method, reference may be made to the description of the aforementioned method embodiments, which is not described in detail again herein.

The managing module 603 is configured to, when the number of the abnormal connections initiated by the client in the TCP connection that is counted by the second counting module 602 is greater than a preset threshold of the number of connections, add the IP address of the client into the blacklist.

Here, the threshold of the number of connections may be a maximum number of abnormal connections initiated by a client which the IP address points to that is allowed within a preset time. In an actual application, the threshold of the number of connections may be set according to a service requirement or network traffic. For example, the threshold of the number of connections may be set to three times per thirty seconds (3 times/30s). When the number of the abnormal connections initiated by the client in the TCP connection that is counted by the second counting module 602 is greater than the preset threshold of the number of connections, the managing module 603 determines that the client is an attacker, and adds the IP address of the client into the blacklist, so as to dynamically update the blacklist. In this case, next time when a packet sent from the IP address is received, the packet may be directly discarded, or a TCP connection initiated by the IP address may be directly disconnected, thereby improving detection efficiency.

Further, in another implementation, the first counting module 501 may specifically include an identifying unit 511 and a counting unit 521.

The identifying unit 511 is configured to, through a type of a packet exchanged between the client and the server in the TCP connection, identify whether the packet is a negotiation packet.

The negotiation packet identified in the identifying unit 511 of this embodiment includes a packet of the Change Cipher Spec type. Specifically, one negotiation packet of the Change Cipher Spec type exists along with each renegotiation process between the client and the SSL server in one TCP connection, where a first negotiation is a normal negotiation and the other non-first negotiation is a repeated negotiation; therefore, the identifying unit 511 may identify whether the packet is a negotiation packet, by determining whether the type of the packet exchanged between the client and the server is the Change Cipher Spec type.

The counting unit 521 is configured to count the number of the renegotiations in the TCP connection according to the number of negotiation packets in the TCP connection that are identified by the identifying unit 511.

In an actual application, the number of the renegotiations in the TCP connection may be obtained by counting the number of negotiation packets of the Change Cipher Spec type that are exchanged between the client and the SSL server in the TCP connection. Specifically, the counting unit 521 may obtain the number of the renegotiations in the TCP connection by subtracting 1 from the number of negotiation packets in the TCP connection within a preset time. For example, if the number of negotiation packets of the Change Cipher Spec type that appear in a certain TCP connection within one hour is 10, it may be obtained that the number of renegotiations in the TCP connection within the one hour is 9.

Further, in another case, the attack defense device 60 may further include:
a receiving module 600, configured to receive a packet sent by a client.

The judging module 601 is further configured to determine whether the packet received by the receiving module 600 matches a session; if the session is hit, continue to determine whether an IP address of the client of the received packet is in a blacklist; if yes, trigger the processing module 503, otherwise, trigger the first counting module 501.

The attack defense device provided in this embodiment, after receiving a packet sent by a client, first, determines, through a judging module, whether the packet matches a session; if the session is hit, continue to determine, according to the received packet, whether an IP address of the client is in a blacklist; if the IP address is not in the blacklist and the counted number of renegotiations in a TCP connection is greater than a threshold of the number of renegotiations, determines that the TCP connection is an abnormal connection, disconnects the TCP connection, records the number of abnormal connections initiated by the client in the TCP connection in a set abnormal connection monitoring table, and when the number of the abnormal connections initiated by the client in the TCP connection exceeds a preset threshold of the number of connections, adds the IP address of the client into the blacklist, so as to update the set blacklist in time, thereby not only being capable of preventing the client having a real IP address from initiating an SSL DOS attack on an SSL server, but also being capable of preventing an attacker from initiating an attack on the server through a virtual IP address. Moreover, the received packet is filtered through the set blacklist, thereby improving defense efficiency.

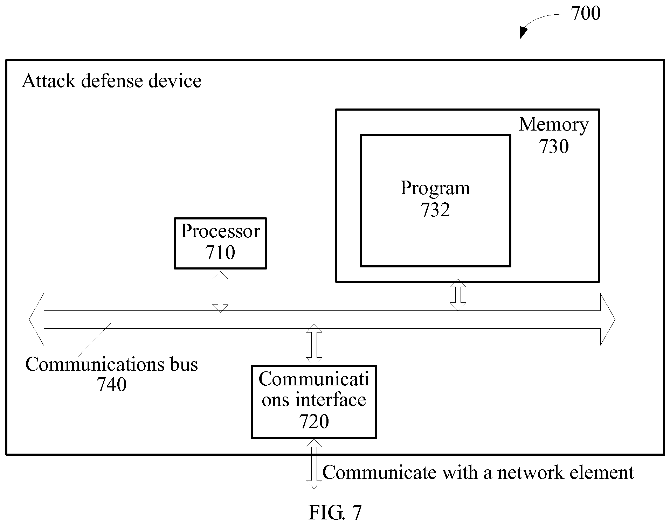

FIG. 7 is a schematic structural diagram of another attack defense device according to an embodiment of the present invention. The attack defense device may be a router, a firewall, or a DDOS cleaning device, and may also be a host server including an attack defense capability. The specific embodiment of the present invention does not limit the specific implementation of the attack defense device. As shown in FIG. 7, the attack defense device may include:
a processor (processor) 710, a communications interface (Communications Interface)
720, a memory (memory) 730, and a communications bus 740.

The processor 710, the communications interface 720, and the memory 730 communicate with each other through the communications bus 740.

The communications interface 720 is configured to communication with a network element, such as a client or an SSL server.

The processor 710 is configured to perform a program 732, and specifically may perform relevant steps in the method embodiments shown in FIG. 2 to FIG. 4.

Specifically, the program 732 may include program codes, and the program codes include a computer operation instruction.

The processor 710 may be a central processing unit CPU, a specific integrated circuit ASIC (Application Specific Integrated Circuit), or one or more integrated circuits configured to implement the embodiments of the present invention.

The memory 730 is configured to store the program 732. The memory 730 may include a high-speed RAM memory, and may further include a non-volatile memory (non-volatile memory), for example, at least one magnetic disk memory. The program 732 specifically may include:
a first counting module, configured to count the number of renegotiations in a TCP connection, where the number of the renegotiations is the number of repeated negotiations between a client and a server in the TCP connection;
an abnormal connection determining module, configured to, when the number of renegotiations in the TCP connection that is counted by the first counting module is greater than a preset threshold of the number of renegotiations, determine that the TCP connection is an abnormal connection; and
a processing module, configured to, when the abnormal connection determining module determines that the TCP connection is an abnormal connection, disconnect the TCP connection.

For specific implementation of each module in the program 732, reference may be made to corresponding modules in the embodiments shown in FIG. 5 to FIG. 6, which is not described in detail again herein.

It can be clearly understood by persons skilled in the art that, for the purpose of convenient and brief description, as for a specific working process of the foregoing device and module, reference can be made to the corresponding process in the foregoing method embodiments, and the details are not described herein again.

In the embodiments provided in the present application, it should be understood that the disclosed device and method may be implemented in other manners. For example, the device embodiment described above is merely exemplary. For example, the division of units is merely division of logical functions and there may be other division manners in actual applications. For example, a plurality of units or components may be combined or may be integrated to another system, or some characteristics may be ignored or not performed. In addition, the shown or discussed mutual couplings or direct couplings or communication connections may be implemented via some interfaces. The indirect couplings or communication connections between apparatuses or units may be implemented in electrical, mechanical, or other forms.

The units described as separate parts may be or may not be physically separate, and parts displayed as units may be or may not be physical units, may be located in one position, or may be distributed on a plurality of network units. A part of or all of the modules may be selected according to actual needs to achieve the objectives of the solutions of the embodiments.

In addition, function units in the embodiments of the present invention may be integrated into one processing module, or each of the modules may exist alone physically, or two or more modules are integrated into a module.

Finally, it should be noted that the foregoing embodiments are merely intended for describing the technical solutions of the present invention, other than limiting the present invention. Although the present invention is described in detail with reference to the foregoing embodiments, persons of ordinary skill in the art should understand that they may still make modifications to the technical solutions described in the foregoing embodiments, or make equivalent replacements to some or all the technical features thereof; such modifications or replacements do not make essence of corresponding technical solutions depart from the scope of the technical solutions of the embodiments of the present invention.

## Claims

1. An attack defense method, comprising:
monitoring a transmission control protocol, TCP, connection established between a client and a SSL server;
counting (201, 301, 403) a number of renegotiations in the TCP connection, wherein the number of the renegotiations is a number of repeated negotiations between the client and the server in the TCP connection;
when the number of the renegotiations in the TCP connection is greater than a preset threshold of the number of renegotiations, determining (202, 302, 405) that the TCP connection is an abnormal connection; and
disconnecting (203, 303) the TCP connection;
wherein the method further comprises:
determining (300, 402) whether an IP address of the client in the TCP connection is in a set blacklist, wherein the blacklist comprises an IP address of a client which initiates an abnormal connection;
when the IP address of the client is not in the blacklist, entering the step of counting (301, 403) the number of the renegotiations in the TCP connection; and
when the IP address of the client is in the blacklist, disconnecting (303) the TCP connection.

2. The method according to claim 1, wherein the counting the number of the renegotiations in the TCP connection comprises:
through a type of a packet exchanged between the client and the server in the TCP connection, identifying whether the packet is a negotiation packet; and
counting the number of the renegotiations in the TCP connection according to the number of negotiation packets in the TCP connection.

3. The method according to claim 2, wherein the negotiation packet comprises a packet of a change cipher specification Change Cipher Spec type.

4. The method according to claim 1, wherein the counting the number of the renegotiations in the TCP connection comprises:
obtaining the number of the renegotiations in the TCP connection by counting the number of negotiation packets of a Change Cipher Spec type that are exchanged between the client and an SSL server in the TCP connection.

5. The method according to any one of claims 1 to 4, further comprising:
counting (304) the number of abnormal connections initiated by the client; and
when the number of the abnormal connections initiated by the client is greater than a preset threshold of the number of connections, adding (305) the IP address of the client into the blacklist.

6. The method according to any one of claims 1 to 5, wherein the attack defense method is used for defense against a secure socket layer, SSL, denial of service, DOS, attack behavior.

7. An attack defense device, comprising:
a module configured to monitor a transmission control protocol, TCP, connection established between a client and a SSL server;
a first counting module (501), configured to count a number of renegotiations in the TCP connection, wherein the number of the renegotiations is a number of repeated negotiations between the client and the server in the TCP connection;
an abnormal connection determining module (502), configured to, when the number of the renegotiations in the TCP connection is greater than a preset threshold of the number of renegotiations, determine that the TCP connection is an abnormal connection; and
a processing module (503), configured to disconnect the TCP connection;
wherein the attack defense device further comprises:
a judging module (601), configured to determine whether an IP address of the client in the TCP connection is in a blacklist, wherein the blacklist comprises an IP address of a client which initiates an abnormal connection, trigger the first counting module (501) when the IP address of the client is not in the blacklist, and trigger the processing module (503) when the IP address of the client is in the blacklist.

8. The attack defense device according to claim 7, wherein the first counting module comprises:
an identifying unit (511), configured to, through a type of a packet exchanged between the client and the server in the TCP connection, identify whether the packet is a negotiation packet; and
a counting unit (521), configured to count the number of the renegotiations in the TCP connection according to the number of negotiation packets in the TCP connection that are identified by the identifying unit.

9. The attack defense device according to claim 8, wherein the negotiation packet comprises a packet of a change cipher specification Change Cipher Spec type.

10. The attack defense device according to claim 7, wherein the first counting module (501) is specifically configured to obtain the number of the renegotiations in the TCP connection by counting the number of negotiation packets of a Change Cipher Spec type that are exchanged between the client and an SSL server in the TCP connection.

11. The attack defense device according to any one of claims 7 to 10, further comprising:
a second counting module (602), configured to count the number of abnormal connections initiated by the client in the TCP connection; and
a managing module (603), configured to, when the number of the abnormal connections initiated by the client in the TCP connection that is counted by the second counting module (602) is greater than a preset threshold of the number of connections, add the IP address of the client into the blacklist.

12. The attack defense device according to any one of claims 7 to 11, wherein the attack defense device is used for defense against a secure socket layer SSL denial of service DOS attack behavior.

## Patentansprüche

1. Angriffsverteidigungsverfahren, umfassend:
Überwachen einer zwischen einem Klienten und einem SSL-Server hergestellten Übertragungssteuerungsprotokoll(Transmission Control Protocol - TCP)-Verbindung;
Zählen (201, 301, 403) einer Anzahl von Wiederverhandlungen in der TCP-Verbindung, wobei die Anzahl der Wiederverhandlungen eine Anzahl von wiederholten Verhandlungen zwischen dem Klienten und dem Server in der TCP-Verbindung ist;
wenn die Anzahl der Wiederverhandlungen in der TCP-Verbindung größer als eine voreingestellte Schwelle der Anzahl von Wiederverhandlungen ist, Bestimmen (202, 302, 405), dass die TCP-Verbindung eine abnormale Verbindung ist; und
Abtrennen (203, 303) der TCP-Verbindung;
wobei das Verfahren weiterhin umfasst:
Bestimmen (300, 402), ob eine IP-Adresse des Klienten in der TCP-Verbindung auf einer gesetzten Schwarzliste ist, wobei die Schwarzliste eine IP-Adresse eines Klienten umfasst, der eine abnormale Verbindung einleitet;
wenn die IP-Adresse des Klienten nicht in der Schwarzliste steht, Eingeben des Schritts des Zählens (301, 403) der Anzahl der Wiederverhandlungen in der TCP-Verbindung; und
wenn die IP-Adresse des Klienten auf der Schwarzliste steht, Abtrennen (303) der TCP-Verbindung.

2. Verfahren nach Anspruch 1, wobei das Zählen der Anzahl der Wiederverhandlungen in der TCP-Verbindung umfasst:
Kennzeichnen, ob das Paket ein Verhandlungspaket ist, durch eine Art eines zwischen dem Klienten und dem Server der TCP-Verbindung ausgetauschten Pakets; und
Zählen der Anzahl der Wiederverhandlungen in der TCP-Verbindung gemäß der Anzahl von Verhandlungspaketen in der TCP-Verbindung.

3. Verfahren nach Anspruch 2, wobei das Verhandlungspaket ein Paket einer Spezifikation-Ziffer-ändern-Art, Change-Cipher-Spec-Art, umfasst.

4. Verfahren nach Anspruch 1, wobei das Zählen der Anzahl der Wiederverhandlungen in der TCP-Verbindung umfasst:
Erhalten der Anzahl der Wiederverhandlungen in der TCP-Verbindung durch Zählen der Anzahl von Verhandlungspaketen einer Spezifikation-Ziffer-ändern-Art, die zwischen dem Klienten und einem SSL-Server in der TCP-Verbindung ausgetauscht werden.

5. Verfahren nach einem beliebigen der Ansprüche 1 bis 4, weiterhin umfassend:
Zählen (304) der Anzahl von durch den Klienten eingeleiteten abnormalen Verbindungen; und
wenn die Anzahl der durch den Klienten eingeleiteten abnormalen Verbindungen größer als eine voreingestellte Schwelle der Anzahl von Verbindungen ist, Zufügen (305) der IP-Adresse des Klienten zu der Schwarzliste.

6. Verfahren nach einem beliebigen der Ansprüche 1 bis 5, wobei das Angriffsverteidigungsverfahren zur Verteidigung gegen ein sichere-Sockelschicht(Secure Socket Layer - SSL)-Dienstverweigerungs(Denial of Service - DOS)-Angriffsverhalten benutzt wird.

7. Angriffsverteidigungsvorrichtung, umfassend:
ein Modul, eingerichtet zum Überwachen einer zwischen einem Klienten und einem SSL-Server hergestellten Übertragungssteuerungsprotokoll(TCP)-Verbindung;
ein erstes Zählmodul (501), eingerichtet zum Zählen einer Anzahl von Wiederverhandlungen in der TCP-Verbindung, wobei die Anzahl der Wiederverhandlungen eine Anzahl wiederholter Verhandlungen zwischen dem Klienten und dem Server in der TCP-Verbindung ist;
ein eine abnormale Verbindung bestimmendes Modul (502), eingerichtet zum Bestimmen, dass die TCP-Verbindung eine abnormale Verbindung ist, wenn die Anzahl der Wiederverhandlungen in der TCP-Verbindung größer als eine voreingestellte Schwelle der Anzahl von Wiederverhandlungen ist; und
ein Verarbeitungsmodul (503), eingerichtet zum Abtrennen der TCP-Verbindung;
wobei die Angriffsverteidigungsvorrichtung weiterhin umfasst:
ein Bewertungsmodul (601), eingerichtet zum Bestimmen, ob eine IP-Adresse des Klienten in der TCP-Verbindung sich in einer Schwarzliste befindet, wobei die Schwarzliste eine IP-Adresse eines Klienten umfasst, der eine abnormale Verbindung einleitet, Auslösen des ersten Zählmoduls (501), wenn die IP-Adresse des Klienten nicht auf der Schwarzliste steht und Auslösen des Verarbeitungsmoduls (503), wenn die IP-Adresse des Klienten auf der Schwarzliste steht.

8. Angriffsverteidigungsvorrichtung nach Anspruch 7, wobei das erste Zählmodul umfasst:
eine Kennzeichnungseinheit (511), eingerichtet zum Kennzeichnen, ob das Paket ein Verhandlungspaket ist, durch eine Art eines zwischen dem Klienten und dem Server in der TCP-Verbindung ausgetauschten Pakets; und
eine Zähleinheit (521), eingerichtet zum Zählen der Anzahl der Wiederverhandlungen in der TCP-Verbindung gemäß der Anzahl von Verhandlungspaketen in der TCP-Verbindung, die durch die Kennzeichnungseinheit gekennzeichnet werden.

9. Angriffsverteidigungsvorrichtung nach Anspruch 8, wobei das Verhandlungspaket ein Paket einer Spezifikation-Ziffer-ändern-Art, Change-Cipher-Spec-Art, umfasst.

10. Angriffsverteidigungsvorrichtung nach Anspruch 7, wobei das erste Zählmodul (501) besonders eingerichtet ist zum Erhalten der Anzahl der Wiederverhandlungen in der TCP-Verbindung durch Zählen der Anzahl von Verhandlungspaketen einer Spezifikation-Ziffer-ändern-Art, die zwischen dem Klienten und einem SSL-Server in der TCP-Verbindung ausgetauscht werden.

11. Angriffsverteidigungsvorrichtung nach einem beliebigen der Ansprüche 7 bis 10, weiterhin umfassend:
ein zweites Zählmodul (602), eingerichtet zum Zählen der Anzahl von durch den Klienten in der TCP-Verbindung eingeleiteten abnormalen Verbindungen; und
ein Verwaltungsmodul (603), eingerichtet zum Zufügen der IP-Adresse des Klienten zu der Schwarzliste, wenn die Anzahl der durch den Klienten in der TCP-Verbindung eingeleiteten abnormalen Verbindungen, die durch das zweite Zählmodul (602) gezählt werden, größer als eine voreingestellte Schwelle der Anzahl von Verbindungen ist.

12. Angriffsverteidigungsvorrichtung nach einem beliebigen der Ansprüche 7 bis 11, wobei die Angriffsverteidigungsvorrichtung zur Verteidigung gegen ein sichere-Sockelschicht(Secure Socket Layer - SSL)-Dienstverweigerungs(Denial of Service - DOS)-Angriffsverhalten benutzt wird.

## Revendications

1. Procédé de défense contre les attaques, comprenant de :
surveiller une connexion de protocole de contrôle de transmission, TCP, établie entre un client et un serveur SSL ;
compter (201, 301, 403) un nombre de renégociations dans la connexion TCP, dans lequel le nombre de renégociations est un nombre de négociations répétées entre le client et le serveur dans la connexion TCP ;
lorsque le nombre de renégociations dans la connexion TCP est supérieur à un seuil prédéterminé du nombre de renégociations, déterminer (202, 302, 405) que la connexion TCP est une connexion anormale ; et
déconnecter (203, 303) la connexion TCP ;
dans lequel le procédé comprend en outre de :
déterminer (300, 402) si une adresse IP du client dans la connexion TCP est dans une liste noire établie, dans lequel la liste noire comprend une adresse IP d'un client qui initie une connexion anormale ;
lorsque l'adresse IP du client n'est pas dans la liste noire, entrer dans l'étape de comptage (301, 403) du nombre de renégociations dans la connexion TCP ; et
lorsque l'adresse IP du client est dans la liste noire, déconnecter (303) la connexion TCP.

2. Procédé selon la revendication 1, dans lequel le comptage du nombre de renégociations dans la connexion TCP comprend de :
à travers un type de paquet échangé entre le client et le serveur dans la connexion TCP, identifier si le paquet est un paquet de négociation ; et
compter le nombre de renégociations dans la connexion TCP en fonction du nombre de paquets de négociation dans la connexion TCP.

3. Procédé selon la revendication 2, dans lequel le paquet de négociation comprend un paquet du type changement de spécification de chiffrement (Change Cipher Spec).

4. Procédé selon la revendication 1, dans lequel le comptage du nombre de renégociations dans la connexion TCP comprend de :
obtenir le nombre de renégociations dans la connexion TCP en comptant le nombre de paquets de négociation d'un type changement de spécification de chiffrement qui sont échangés entre le client et un serveur SSL dans la connexion TCP.

5. Procédé selon l'une quelconque des revendications 1 à 4, comprenant en outre de :
compter (304) le nombre de connexions anormales initiées par le client ; et
lorsque le nombre de connexions anormales initiées par le client est supérieur à un seuil prédéterminé du nombre de connexions, ajouter (305) l'adresse IP du client à la liste noire.

6. Procédé selon l'une quelconque des revendications 1 à 5, dans lequel le procédé de défense contre les attaques est utilisé pour la défense contre un comportement d'attaque par déni de service, DOS, de couche de connexion sécurisée, SSL.

7. Dispositif de défense contre les attaques, comprenant :
un module configuré pour surveiller une connexion de protocole de contrôle de transmission, TCP, établie entre un client et un serveur SSL ;
un premier module de comptage (501), configuré pour compter un nombre de renégociations dans la connexion TCP, dans lequel le nombre de renégociations est un nombre de négociations répétées entre le client et le serveur dans la connexion TCP;
un module de détermination de connexion anormale (502), configuré pour, lorsque le nombre de renégociations dans la connexion TCP est supérieur à un seuil prédéterminé du nombre de renégociations, déterminer que la connexion TCP est une connexion anormale ; et
un module de traitement (503), configuré pour déconnecter la connexion TCP ;
dans lequel le dispositif de défense contre les attaques comprend en outre :
un module de jugement (601), configuré pour déterminer si une adresse IP du client dans la connexion TCP est dans une liste noire, dans lequel la liste noire comprend une adresse IP d'un client qui initie une connexion anormale, déclencher le premier module de comptage (501) lorsque l'adresse IP du client n'est pas dans la liste noire,
et déclencher le module de traitement (503) lorsque l'adresse IP du client est dans la liste noire.

8. Dispositif de défense contre les attaques selon la revendication 7, dans lequel le premier module de comptage comprend :
une unité d'identification (511), configurée pour, à travers un type de paquet échangé entre le client et le serveur dans la connexion TCP, identifier si le paquet est un paquet de négociation ; et
une unité de comptage (521) configurée pour compter le nombre de renégociations dans la connexion TCP en fonction du nombre de paquets de négociation dans la connexion TCP qui sont identifiés par l'unité d'identification.

9. Dispositif de défense contre les attaques selon la revendication 8, dans lequel, dans lequel le paquet de négociation comprend un paquet du type changement de spécification de chiffrement (Change Cipher Spec).

10. Dispositif de défense contre les attaques selon la revendication 7, dans lequel le premier module de comptage (501) est spécifiquement configuré pour obtenir le nombre de renégociations dans la connexion TCP en comptant le nombre de paquets de négociation d'un type changement de spécification de chiffrement qui sont échangés entre le client et un serveur SSL dans la connexion TCP.

11. Dispositif de défense contre les attaques selon l'une quelconque des revendications 7 à 10, comprenant en outre :
un second module de comptage (602), configuré pour compter le nombre de connexions anormales initiées par le client dans la connexion TCP ; et
un module de gestion (603), configuré pour, lorsque le nombre de connexions anormales initiées par le client dans la connexion TCP qui est compté par le second module de comptage (602) est supérieur à un seuil prédéfini du nombre de connexions, ajouter l'adresse IP du client à la liste noire.

12. Dispositif de défense contre les attaques selon l'une quelconque des revendications 7 à 11, dans lequel le dispositif de défense contre les attaques est utilisé pour la défense contre un comportement d'attaque par déni de service, DOS, de couche de connexion sécurisée, SSL.
